# EUROPÄISCHE PATENTSCHRIFT

(11) **EP 3 221 942 B1**
(45) Veröffentlichungstag und Bekanntmachung des Hinweises auf die Patenterteilung: **17.07.2019**
(21) Anmeldenummer: 15787540.2
(22) Anmeldetag: 26.10.2015
(51) Int. Cl.: H02H 1/06, H02H 3/08, H02H 3/16

(54) **FEHLERSTROMSCHUTZSCHALTER**
RESIDUAL-CURRENT CIRCUIT BREAKER
INTERRUPTEUR DE PROTECTION CONTRE LES COURANTS DE COURT-CIRCUIT

(30) Priorität: 18.11.2014 DE 102014116851
(43) Veröffentlichungstag der Anmeldung: 27.09.2017
(73) Patentinhaber: Eaton Intelligent Power Limited, Dublin 4 (IE)
(72) Erfinder: SARANCIC, Goran, A-1230 Wien (AT)
(74) Vertreter: Eaton IP Group EMEA
(86) Internationale Anmeldenummer: PCT/EP2015/074778
(87) Internationale Veröffentlichungsnummer: WO 2016/078874

(56) Entgegenhaltungen:
- EP-A2- 2 169 798
- WO-A1-02/13350
- US-A- 3 936 699

## Beschreibung

Die Erfindung betrifft ein Schutzschaltgerät gemäß dem Oberbegriff des Patentanspruches 1.

Es sind Schutzschaltgeräte bekannt, welche eine aktive, durch das zu überwachende Netz mit Energie versorgte, elektronische Schaltung aufweisen, welche Parameter des elektrischen Netzes überwacht und gegebenenfalls bei Auftreten vorgebbarer Zustände ein Auslösen des Schutzschaltgeräts verursacht und derart das betreffende elektrische Teilnetz abtrennt. Der Vorteil derartiger aktiver elektronischer Schaltungen liegt in den, gegenüber passiven Schaltungen, deutlich gesteigerten Möglichkeiten der Analyse des Zustandes des zu überwachenden Netzes. Dadurch kann nicht nur der Schutz von Anlagen und Lebewesen verbessert werden, es kann auch die Anzahl an Fehlauslösungen reduziert werden, und derart die Netzverfügbarkeit erhöht werden.

Allerdings erfordert die aktive Elektronik eine Energieversorgung. Da es sich bei einem Schutzschalgerät um eine Vorrichtung handelt, von der das Wohl von Menschen und Anlagen abhängen kann, werden an die Energieversorgung derartiger aktiver elektronischer Schaltungen in Schutzschaltgeräten besondere Anforderungen gestellt. Diese müssen sowohl bei deutlich geringerer Versorgungsspannung arbeiten, als der standardmäßigen Netzspannung, als auch sehr robust bzw. langlebig sein. Weiters müssen diese innerhalb sehr kurzer Zeit nach dem Anliegen einer elektrischen Spannung von ausreichender Höhe einsatzbereit sein. Die in Schutzschaltgeräten in der Regel äußerst begrenzten Platzverhältnisse, sowie die sehr eingeschränkte Möglichkeit der Kühlung der verwendeten Komponenten, stellen weitere Faktoren dar, welchen Rechnung getragen werden muss.

Aufgrund der hohen Anforderungen an die Energieversorgung aktiver elektronsicher Auslöseschaltungen in Schutzschaltgeräten und den bislang erforderlichen hohen Aufwänden zum Erreichen dieser Anforderungen, sind sog. netzspannungsabhängige Schutzschaltgeräte kaum verbreitet, obwohl diese sowohl eine hohe Netzverfügbarkeit, als auch einen guten Schutz gegen die gefährliche Wirkungen des elektrischen Stromes ermöglichen.

Die EP 2 169 798 A2 die den Oberbegriff des Anspruchs 1 formt, beschreibt einen Überlastschalter mit einem Netzteil, in welchem ein selbstleitender JFET angeordnet ist, um schnell betriebsbereit zu sein.

Aus der WO 02/13350 A1 geht ein Netzteil für Niederspannungs-Fehlerstromschutzschalter mit selbstleitenden Feldeffekttransistoren hervor. Aufgabe der Erfindung ist es daher ein Schutzschaltgerät der eingangs genannten Art anzugeben, mit welchem die genannten Nachteile vermieden werden können, welches schnell nach Anliegen einer ausreichend hohen Netzspannung einsatzbereit ist, und welcher zuverlässig im Einsatz ist.

Erfindungsgemäß wird dies durch die Merkmale des Patentanspruches 1 erreicht. Dadurch kann ein sehr zuverlässiges Schutzschaltgerät geschaffen werden, welches den Einsatz einer netzspannungsabhängigen elektronischen Auswerte- bzw. Auslöseschaltung ermöglicht. Durch die gegenständliche Ausbildung des Netzteils kann eine besonders schnelle Verfügbarkeit der Versorgungsspanung nach Anliegen einer ausreichend hohen Netzspannung erreicht werden. Der gegenständliche Aufbau mit einer geringen Anzahl erforderlicher Teile, führt zu hoher Zuverlässigkeit. Die durch die wenigen Bauteile verursachte Verlustleistung ist sehr gering, kann einfach abgeführt werden und führt zu keiner, die Lebensdauer der Bauteile signifikant verringernden Temperaturerhöhung innerhalb des räumlich begrenzten Innenraums des Schutzschaltgeräts. Dadurch kann ein einfach aufgebautes Netzteil geschaffen werden, welches schnell einsatzbereit ist, eine geringe Anzahl erforderlicher Teile und eine hohe Lebensdauer aufweist.

Ausdrücklich wird hiermit auf den Wortlaut des Anspruchs 1 Bezug genommen, wodurch der Anspruch an dieser Stelle durch Bezugnahme in die Beschreibung eingefügt ist und als wörtlich wiedergegeben gilt.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Blockschaltbild eines gegenständlichen Schutzschaltgeräts; und
Fig. 2 einen schematischen Stromlaufplan eines Netzteils eines Schutzschaltgeräts gemäß Fig. 1.

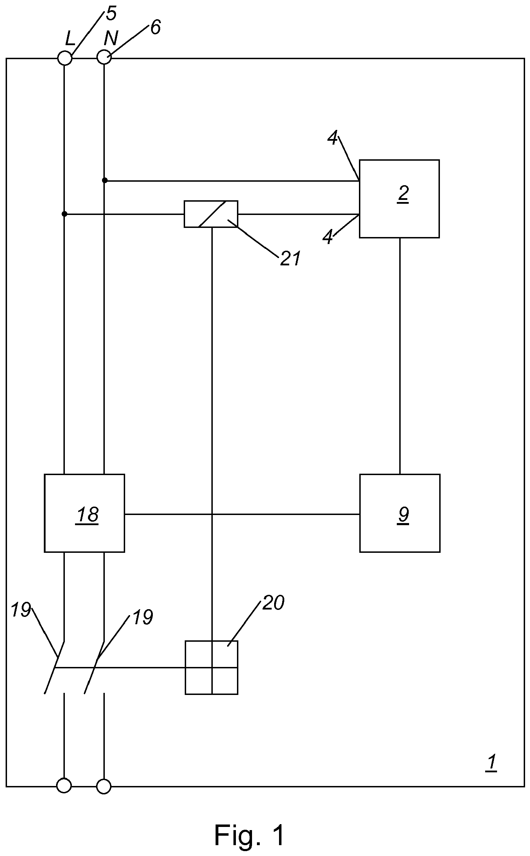

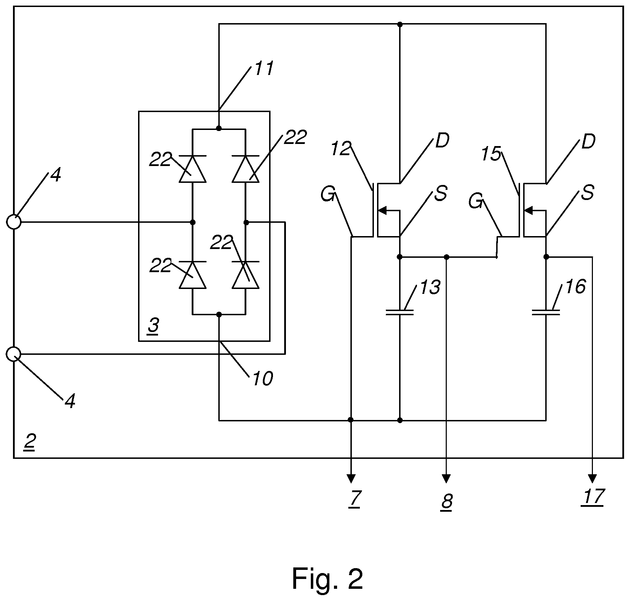

Fig. 1 zeigt ein Schutzschaltgerät 1 mit einem Netzteil 2, wobei das Netzteil 2 eine Gleichrichterschaltung 3 mit Wechselstromnetzteileingängen 4 aufweist, welche mit wenigstens einer ersten Anschlussklemme 5 und einer zweiten Anschlussklemme 6 des Schutzschaltgeräts 1 verbunden sind, wobei das Netzteil 2 zumindest einen ersten und einen zweiten Gleichstromnetzteilausgang 7, 8 aufweist, welche mit einer netzspannungsabhängigen Auslöseschaltung 9 des Schutzschaltgeräts 1 verbunden sind. Fig. 2 zeigt dabei ein entsprechendes Netzteil 2, bei welchem an einem ersten Gleichstromausgang 10 der Gleichrichterschaltung 3 der Gate G wenigstens eines ersten selbstleitenden Feldeffekttransistors 12 angeschlossen ist, wobei an einem zweiten Gleichstromausgang 11 der Gleichrichterschaltung 3 der Drain D des ersten Feldeffekttransistors 12 angeschlossen ist, wobei die Source S des ersten Feldeffekttransistors 12 über einen ersten Kondensator 13 mit dem ersten Gleichstromausgang 10 der Gleichrichterschaltung 3 verbunden ist, wobei der erste Gleichstromausgang 10 der Gleichrichterschaltung 3 mit dem ersten Gleichstromnetzteilausgang 7 verbunden ist, und wobei die Source S des ersten Feldeffekttransistors 12 mit dem zweiten Gleichstromnetzteilausgang 8 verbunden ist.

Dadurch kann ein sehr zuverlässiges Schutzschaltgerät 1 geschaffen werden, welches den Einsatz einer netzspannungsabhängigen elektronischen Auswerte- bzw. Auslöseschaltung 9 ermöglicht. Durch die gegenständliche Ausbildung des Netzteils 2 kann eine besonders schnelle Verfügbarkeit der Versorgungsspanung nach Anliegen einer ausreichend hohen Netzspannung erreicht werden. Der gegenständliche Aufbau mit einer geringen Anzahl erforderlicher Teile, führt zu hoher Zuverlässigkeit. Die durch die wenigen Bauteile verursachte Verlustleistung ist sehr gering, kann einfach abgeführt werden und führt zu keiner, die Lebensdauer der Bauteile signifikant verringernden Temperaturerhöhung innerhalb des räumlich begrenzten Innenraums des Schutzschaltgeräts. Dadurch kann ein einfach aufgebautes Netzteil 2 geschaffen werden, welches schnell einsatzbereit ist, eine geringe Anzahl erforderlicher Teile und eine hohe Lebensdauer aufweist.

Das gegenständliche Schutzschaltgerät 1 kann als jede Art eines Schutzschaltgeräts 1 ausgebildet sein, sofern dieses eine netzspannungsabhängige Auswerte- und/oder Auslöseschaltung 9 aufweist. Bevorzugt ist vorgesehen, dass das Schutzschaltgerät 1 als Fehlerstromschutzschalter bzw. Differenzstromschutzschalter ausgebildet ist. Gemäß einer weiteren bevorzugten Ausführungsform ist die Ausbildung des Schutzschaltgeräts 1 als Lichtbogenschutzschalter vorgesehen.

In an sich bekannter Weise weist das Schutzschaltgerät 1 ein nicht dargestelltes Isolierstoffgehäuse auf.

Das Schutzschaltgerät 1 weist Anschlussklemmen 5, 6 auf, zum Anschluss elektrischer Leiter N, L eines elektrischen Netzes, wobei an das Schutzschaltgerät 1 wenigstens zwei Leiter N, L anschließbar sind, welche ein unterschiedliches elektrisches Potential führen.

Das Schutzschaltgerät 1 weist Schaltkontakte 19 auf, wobei wenigstens ein Schaltkontakt 19 innerhalb einer elektrischen Verbindung von einer Anschlussklemme 5, 6 zu einer anderen Anschlussklemme des Schutzschaltgeräts 1 angeordnet ist. Das in Fig. 1 schematisch dargestellte Schutzschaltgerät 1 weist zwei Paar Schaltkontakte 19 auf.

Weiters weist das Schutzschaltgerät 1 eine Mechanik zum Schließen der Schaltkontakte 19 auf, um derart einen leitenden Pfad durch das Schutzschaltgerät 1 zu bilden. Die Mechanik, welche bevorzugt ein sog. Schaltschloss 20 umfasst, ist weiters insbesondere dazu vorgesehen und ausgebildet, die Schaltkontakte 19 im Fehlerfall schnell und sicher zu trennen.

Das Schutzschaltgerät 1 weist wenigstens einen Sensor auf, zur Aufnahme einer elektrischen oder nicht elektrischen physikalischen Messgröße, wobei vielerlei Arten Sensoren vorgesehen sein können. Insbesondere ist vorgesehen, dass der Sensor als Stromsensor und/oder Spannungssensor ausgebildet ist. Bei dem gegenständlich dargestellten besonders bevorzugten Beispiel der Ausbildung des Schutzschaltgeräts 1 als Fehlerstromschutzschalter ist einen Sensor in Form eines Summenstromwandlers 18 vorgesehen.

Wie bereits erwähnt, weist das Schutzschaltgerät 1 eine netzspannungsabhängige Auslöseschaltung 9 auf. Diese Auslöseschaltung 9 ist wenigstens mittelbar mit dem wenigstens einen Sensor verbunden. Es sei an dieser Stelle darauf hingewiesen, dass die Verbindungslinien in Fig. 1 lediglich der Veranschaulichung funktionaler Zusammenhänge dienen, und - sofern nicht anders angegeben - keine Darstellung einzelner elektrischer Leiter sind.

Zur Energieversorgung der netzspannungsabhängigen Auslöseschaltung 9 weist das Schutzschaltgerät ein Netzteil 2 auf.

Das Netzteil 2 weist eine Gleichrichterschaltung 3 sowie Wechselstromnetzteileingängen 4 auf, welche mit der ersten Anschlussklemme 5 und der zweiten Anschlussklemme 6 des Schutzschaltgeräts 1 verbunden sind. Ausgangsseitig weist das Netzteil 3 zumindest einen ersten Gleichstromnetzteilausgang 7 und einen zweiten Gleichstromnetzteilausgang 8 auf, an welche der netzspannungsabhängige Auslöseschaltung 9 des Schutzschaltgeräts 1 angeschlossen ist.

Die Gleichrichterschaltung 3 ist bevorzugt, und wie in Fig. 2 dargestellt, als Brückenschaltung bzw. Graetzbrücke ausgebildet, und weist zwei Wechselstromeingänge, sowie zwei Gleichstromausgänge 10, 11 auf. Die Wechselstromeingänge der Gleichrichterschaltung können dabei identisch zu den Wechselstromnetzteileingängen 4 sein.

Das Netzteil 3 weist weiters wenigstens einen ersten Feldeffekttransistor 12 auf, welcher als selbstleitender Feldeffekttransistor 12 ausgebildet ist. Ein Feldeffekttransistor 12, 15 weist in an sich bekannter Weise als Anschlüsse jeweils einen Gate G, eine Source S und einen Drain D auf.

Es ist vorgesehen, dass an einem ersten Gleichstromausgang 10 der Gleichrichterschaltung 3 der Gate G des ersten selbstleitenden Feldeffekttransistors 12 angeschlossen ist. Der Drain D des ersten Feldeffekttransistors 12 ist an den zweiten Gleichstromausgang 11 der Gleichrichterschaltung 3 angeschlossen. Die Source S des ersten Feldeffekttransistors 12 ist an einen Anschluss eines ersten Kondensators 13 angeschlossen, dessen zweiter Anschluss mit dem ersten Gleichstromausgang 10 der Gleichrichterschaltung 3 verbunden ist. Der erste Gleichstromausgang 10 der Gleichrichterschaltung 3 bildet gleichzeitig den ersten Gleichstromnetzteilausgang 7 bzw. ist mit diesem elektrisch verbunden. Die Source S des ersten Feldeffekttransistors 12 bildet den zweiten Gleichstromnetzteilausgang 8 bzw. ist mit diesem elektrisch verbunden.

Dadurch liegt an dem ersten Gleichstromnetzteilausgang 7 und dem zweiten Gleichstromnetzteilausgang 8 eine Potentialdifferenz an, welche der Höhe der Gate-Treshold-Spannung des verwendeten Feldeffekttransistors 12, 15 entspricht. Die an diesen beiden Gleichstromnetzteilausgängen anliegende Spannung beträgt beispielsweise bei Verwendung eines FETs von Typ BSS126 der Firma Infineon ca. 2V. Diese Spannung wird durch die gegenständliche Schaltungsanordnung sehr konstant eingehalten.

Ein besonderer Vorteil der gegenständlichen Schaltungsanordnung ist der Umstand, dass diese einfach kaskadierbar ist, indem die nachfolgend beschriebene Schaltungsanordnung einfach oder mehrfach in dem Netzteil vorgesehen ist.

Gemäß einer bevorzugten Ausführung der gegenständlichen Erfindung ist vorgesehen, dass das Netzteil 2 einen zweiten selbstleitenden Feldeffekttransistor 15 aufweist. Die Source S des zweiten Feldeffekttransistors 15 ist dabei mittels eines zweiten Kondensators 16 mit dem ersten Gleichstromausgang 10 der Gleichrichterschaltung 3 verbunden. Der Drain D des zweiten Feldeffekttransistors 15 ist mit dem zweiten Gleichstromausgang 11 der Gleichrichterschaltung 3 verbunden, und der Gate G des zweiten Feldeffekttransistors 15 ist mit der Source S des ersten Feldeffekttransistors 12 verbunden. Die Source S des zweiten Feldeffekttransistors 15 bildet dabei einen dritten Gleichstromnetzteilausgang 17 des Netzteils 2 bzw. ist mit einem solchen elektrisch verbunden. Die Spannung zwischen dem ersten Gleichstromnetzteilausgang 7 und dem dritten Gleichstromnetzteilausgang 17 beträgt dabei die doppelte Gate-Treshold-Spannung der verwendeten Feldeffekttransistoren. Entsprechend den Anforderungen der nachgeschalteten Elektronik kann derart durch Auswahl und die Anzahl der verwendeten Transistoren, einfach eine elektrische Versorgungsspannung zur Verfügung gestellt werden, wobei das Netzteil 2 nach Anliegen einer elektrischen Wechselspannung am Eingang, sehr schnell eine stabile Gleichspannung an den entsprechenden Gleichstromnetzteilausgängen 7, 8, 17 bereit stellt.

## Patentansprüche

1. Schutzschaltgerät (1), insbesondere Fehlerstromschutzschalter, mit einem Netzteil (2), wobei das Netzteil (2) eine Gleichrichterschaltung (3) mit Wechselstromnetzteileingängen (4) aufweist, welche mit wenigstens einer ersten Anschlussklemme (5) und einer zweiten Anschlussklemme (6) des Schutzschaltgeräts (1) verbunden sind, wobei das Netzteil (2) zumindest einen ersten und einen zweiten Gleichstromnetzteilausgang (7, 8) aufweist, welche mit einer netzspannungsabhängigen Auslöseschaltung (9) des Schutzschaltgeräts (1) verbunden sind, wobei an einem ersten Gleichstromausgang (10) der Gleichrichterschaltung (3) der Gate (G) wenigstens eines ersten selbstleitenden Feldeffekttransistors (12) angeschlossen ist, wobei an einem zweiten Gleichstromausgang (11) der Gleichrichterschaltung (3) der Drain (D) des ersten Feldeffekttransistors (12) angeschlossen ist, wobei die Source (S) des ersten Feldeffekttransistors (12) über einen ersten Kondensator (13) mit dem ersten Gleichstromausgang (10) der Gleichrichterschaltung (3) verbunden ist, wobei der erste Gleichstromausgang (10) der Gleichrichterschaltung (3) mit dem ersten Gleichstromnetzteilausgang (7) verbunden ist, und wobei die Source (S) des ersten Feldeffekttransistors (12) mit dem zweiten Gleichstromnetzteilausgang (8) verbunden ist, **dadurch gekennzeichnet, dass** das Netzteil (2) einen zweiten selbstleitenden Feldeffekttransistor (15) aufweist, dass die Source (S) des zweiten Feldeffekttransistors (15) über einen zweiten Kondensator (16) mit dem ersten Gleichstromausgang (10) der Gleichrichterschaltung (3) verbunden ist, dass der Drain (D) des zweiten Feldeffekttransistors (15) mit dem zweiten Gleichstromausgang (11) der Gleichrichterschaltung (3) verbunden ist, dass der Gate (G) des zweiten Feldeffekttransistors (15) mit der Source (S) des ersten Feldeffekttransistors (12) verbunden ist, und dass die Source (S) des zweiten Feldeffekttransistors (15) mit einem dritten Gleichstromnetzteilausgang (17) des Netzteils (2) verbunden ist.

## Claims

1. Protective switching device (1), in particular residual-current circuit breaker, having a power supply (2), wherein the power supply (2) has a rectifier circuit (3) having alternating current power supply inputs (4), which are connected with at least one first connecting clamp (5) and one second connecting clamp (6) of the protective switching device (1), wherein the power supply (2) has at least one first and one second direct current power supply output (7, 8), which are connected with a mains voltage-dependent trigger circuit (9) of the protective switching device (1), wherein at a first direct current output (10) of the rectifier circuit (3) is connected the gate (G) of at least one first self-conducting field-effect transistor (12), wherein at a second direct current output (11) of the rectifier circuit (3) is connected the drain (D) of the first field-effect transistor (12), wherein the source (S) of the first field-effect transistor (12) is connected via a first capacitor (13) with the first direct current output (10) of the rectifier circuit (3), wherein the first direct current output (10) of the rectifier circuit (3) is connected with the first direct current power supply output (7), and wherein the source (S) of the first field-effect transistor (12) is connected with the second direct current power supply output (8), **characterised in that** the power supply (2) has a second self-conducting field-effect transistor (15), that the source (S) of the second field-effect transistor (15) is connected via a second capacitor (16) with the first direct current output (10) of the rectifier circuit (3), that the drain (D) of the second field-effect transistor (15) is connected with the second direct current output (11) of the rectifier circuit (3), that the gate (G) of the second field-effect transistor (15) is connected with the source (S) of the first field-effect transistor (12), and that the source (S) of the second field-effect transistor (15) is connected with a third direct current power supply output (17) of the power supply (2).

## Revendications

1. Appareil de commutation de protection (1), en particulier commutateur de protection contre les courants de court-circuit, avec un bloc d'alimentation (2), dans lequel le bloc d'alimentation (2) présente un montage redresseur (3) avec des entrées de bloc d'alimentation en courant alternatif (4) qui sont connectées à au moins une première borne d'alimentation (5) et une seconde borne d'alimentation (6) de l'appareil de commutation de protection (1), dans lequel le bloc d'alimentation (2) présente au moins une première et une deuxième sortie de bloc d'alimentation en courant continu (7, 8) qui sont connectées à un circuit déclencheur (9) de l'appareil de commutation de protection (1) qui est fonction de la tension du secteur, dans lequel est connectée à une première sortie de courant continu (10) du montage redresseur (3) la grille (G) d'au moins un premier transistor à effet de champ autoconducteur (12), dans lequel est connecté à une seconde sortie de courant continu (11) du montage redresseur (3) le drain (D) du premier transistor à effet de champ (12), dans lequel la source (S) du premier transistor à effet de champ (12) est connectée via un premier condensateur (13) à la première sortie de courant continu (10) du montage redresseur (3), dans lequel la première sortie de courant continu (10) du montage redresseur (3) est connectée à la première sortie de bloc d'alimentation de courant continu (7), et dans lequel la source (S) du premier transistor à effet de champ (12) est connectée à la deuxième sortie de bloc d'alimentation de courant continu (8), **caractérisé en ce que** le bloc d'alimentation (2) présente un second transistor à effet de champ autoconducteur (15), la source (S) du second transistor à effet de champ (15) est connectée via un second condensateur (16) à la première sortie de courant continu (10) du montage redresseur (3), le drain (D) du second transistor à effet de champ (15) est raccordé à la deuxième sortie de courant continu (11) du montage redresseur (3), la grille (G) du second transistor à effet de champ (15) est connectée à la source (S) du premier transistor à effet de champ (12) et la source (S) du second transistor à effet de champ (15) est connectée à une troisième sortie de bloc d'alimentation de courant continu (17) du bloc d'alimentation (2).
